## Europäisches Patentamt
## European Patent Office
## Office européen des brevets

(11) Veröffentlichungsnummer: **0 046 513**
**B1**

(12) # EUROPÄISCHE PATENTSCHRIFT

(45) Veröffentlichungstag der Patentschrift: **30.09.87**

(51) Int. Cl.⁴: **A 01 K 7/02, F 16 K 7/17**

(21) Anmeldenummer: **81105899.9**

(22) Anmeldetag: **25.07.81**

(54) **Tränkvorrichtung für Tiere.**

(30) Priorität: **14.08.80 DE 3030758**

(43) Veröffentlichungstag der Anmeldung:
**03.03.82 Patentblatt 82/09**

(45) Bekanntmachung des Hinweises auf die
Patenterteilung:
**30.09.87 Patentblatt 87/40**

(84) Benannte Vertragsstaaten:
**AT BE CH DE FR GB IT LI NL SE**

(56) Entgegenhaltungen:
**DE-A-1 607 200**
**DE-B-1 161 458**
**FR-A-2 267 029**
**GB-A-1 230 171**
**US-A-3 176 707**
**US-A-3 586 017**

(73) Patentinhaber: **Langenegger, Georg**
**Bachstrasse, 10**
**D-8050 Freising (DE)**

(72) Erfinder: **Langenegger, Georg, Ing.grad.**
**Bachstrasse 10**
**D-8050 Freising (DE)**
Erfinder: **Bauer, Franz**
**Unterer Graben 2**
**D-8050 Freising (DE)**
Erfinder: **Langenegger, Josef**
**Deutschherrnstrasse 10**
**D-8891 Petersdorf (DE)**

(74) Vertreter: **Braito, Herbert, Dipl.-Ing.**
**Postfach 1140 Martin-Luther-Strasse 1**
**D-7950 Biberach/Riss 1 (DE)**

Courier Press, Leamington Spa, England.

## Beschreibung

Die Erfindung betrifft eine Tränkvorrichtung für Tiere, mit einem Becken, das an eine Zuführleitung für Tränkflüssigkeit durch ein in Abhängigkeit vom Flüssigkeitsbedarf mittels einer Vorsteuerung zu betätigendes Membranvetil angeschlossen ist, das eine mit ihrem Rand in einem Ventilgehäuse eingespannte Ventilmembran aufweist, deren erste Seite abhebbar mit einem Rinstutzen zusammenwirkt, der einen Zuführanschluß von einem Beckenanschluß an der Ventilmembran trennt, und deren zweite Seite von einem Vorspannraum überdeckt ist, dessen Druck mittles eines Vorsteuerorgans einer Vorsteuereinrichtung durch eine Tastmembran beeinflußt ist, die vom Flüssigkeitsdruck im Becken gegen einen umschlossenen Rückraum beaufschlagt ist, der über eine Strömungsverbindung an einen Gasdruckraum angeschlossen ist.

Zum Tränken von Haus- und Weidetieren haben sich in den letzten Jahren Selbsttränkesysteme durchgesetzt, bei welchen meist das Tier ein Ventil mittels eines Auslösers betätigt, der beispielsweise durch einen in das Becken hineinragenden Hebel oder Bügel gebildet wird. Dabei ergeben sich vor allem dann Schwierigkeiten, wenn mit der gleichen Tränkvorrichtung mehrere Tiere getränkt werden sollen. So werden zum Tränken eines Rindes etwa 25 Liter Wasser benötigt, die innerhalb einer Minute abgegeben werden sollten. Dies erfordert weit öffnende Ventile, die bei direkter Betätigung erhebliche Auslösekräft benötigen. Junge Tiere haben mit der Bedienung von Ventilen erhebliche Schwierigkeiten. Es wird auch der natürliche Trinkvorgang der Tiere wesentlich behindert, wenn während dieses Vorganges oder zwischenzeitig irgendwelche Verrichtungen vorgenommen werden müssen.

Membranventile mit Vorsteuerung sind in verschiedenen Ausführungen bekannt und werden auf verschiedenartigen Fachgebieten, beispielsweise in Waschmaschinen eingesetzt. Sie ermöglichen mit ungewöhnlich kleinen Auslösekräften die Steuerung großer Ausflußmengen, sind orientierungsunempfindlich und können praktisch in jeder Lage eingebaut werden.

Es ist auch die Verwendung eines Membranventils mit Vorsteuerung zum Tränken von Vieh bekannt durch die UA—A—3,586,017. Dabei ist eine Gummiplatte, welche die Ventilmembran und die Tastmembran bildet, zwischen zwei schalenförmigen Körpern eingespannt und mit der gesamten Ventilanordnung im Innenraum des Beckens unterhalb des Flüssigkeitsspiegels angebracht. Dort betätigt die Tastmembranmittels eines Hebels das Vorsteuerorgan in Form eines Ventilelementes, das die Verbindung des Vorspannraumes mit dem Beckenraum steuert. Die Rückseite der Tastmembran steht dort unter der Einwirkung einer Druckfeder und unter dem Luftdruck einer abgeschlossenen Kammer.

Dadurch ergeben sich außergewöhnlich große Schwankungen der gesteuerten Füllhöhe, da die Unterseite der Tastmembran einer fest vorgegebenen Kraft, die Oberseite aber dem zum Teil recht erheblich schwankenden Luftdruck ausgesetzt ist. Wie groß diese Unterschiede sind, wird deutlich, wenn man bedenkt, daß allein auf einem geographisch eng begrenzten Gebiet wie Deutschland der Luftdruck etwa zwischen 970 und 1040 mbar schwankt, wobei gar örtliche Luftdruckschwankungen bis zu 50 mbar innerhalb eines einzigen Tages vorkommen können. Dies hat Höhendifferenzen von 500 mm des gesteuerten Wasserspiegels zur Folge, während Toleranzen von weniger als 10 mm angestrebt werden. Weicht aber der atmosphärische Druck bei einem solchen geschlossenen Gerät vom Einstelldruck ab, dann öffnet entweder das Ventil überhaupt nicht, oder es schließt nicht.

In der Praxis ist einmal ein sehr genaues Steuern des Flüssigkeitsspiegels und zum anderen ein sehr schnelles Schalten zum Tränken von Großvieh notwendig, das erhebliche Flüssigkeitsmengen in der Zeiteinheit verbraucht. Von bemerkenswerter Schaltgenauigkeit kann bei der Tränkvorrichtung nach US—A—35 86 017 keine Rede sein. Diese Vorrichtung hat auch keine praktische Bedeutung erlangt.

Die Erfindung geht aus von der eingangs genannten Tränkvorrichtung und verfolgt die Aufgabe, diese Vorrichtung derart weiterzubilden, daß neben Funktions- und Betriebssicherheit vor allem ihre Füllgenauigkeit verbessert wird.

Zur Lösung dieser Aufgabe läßt man erfindungsgemäß die vom Rückraum der Tastmembran ausgehende Strömungsverbindung in die Atmosphäre münden. Hier wird somit die auf die Vorderseite der Tastmembran wirkende, mit dem Luftdruck veränderliche Kraft dadurch kompensiert, daß man auch die Rückseite der Tastmembran der gleichen veränderlichen Kraft aussetzt. Der zusätzlichen Belastung durch den auf die Membranvorderseite einwirkenden Flüssigkeitsdruck kann jetzt eine ganz bestimmte und technisch exakt vorzugebende Rückstellkraft entgegenwirken, ohne daß atmosphärische Druckschwankungen die gesteuerte Füllhöhe beeinflussen können.

Es wird also auf äußerst einfache Weise eine wesentliche Steigerung der Steuergenauigkeit erreicht, was Bedeutung für alle Tränkvorgänge, insbesondere auch von Kleinvieh hat, und die Mengensteuerung für Großvieh bleibt unbeeinflußt. Es sind auch die Funktions- und Betriebssicherheit erhöht, da statt eine schwer beherrschbaren Kraft aus dem Druck eines mehr oder weniger dicht abgeschlossenen Raumes eine allerorts gegenwärtige und dadurch augenblicklich stets eindeutig bestimmte Naturkraft eingesetzt ist.

Nach einer bevorzugten Ausführungsform der Erfindung mündet der Zuführanschluß in den den Ringstutzen umgebenden Außenraum des Membranventils, während der Innenraum des Ringstutzens mit dem Beckenanschluß in Verbindung ist.

Durch die Zuführung der Tränkflüssigkeit in den den Ringstutzen umgebenden Außenraum wird die Belastung der Membran wesentlich herabgesetzt. Da sich die Verformung vornehmlich im großflächigen Außenbereich abspielt, ist vor allem die Biegebeanspruchung im sonst gefährdeten Innenbereich wesentlich herabgesetzt. Auch wenn die Membran einmal beschädigt werden sollte, wäre hiervon nur der Außenbereich betroffen, und dann bleibt das Ventil geschlossen, weil sich der Zuführdruck auf den ganzen Vorspannraum erstreckt. Selbst wenn man eine Steuerströmung durch die Ventilmembran hindurchführt, muß die benötigte Durchbrechung im Außenbereich angebracht sein, kann also die Funktion des Vorsteuerorgans nicht beeinflussen.

Durch die DE—B—11 61 458 ist bereits ein insbesondere für die Kühlwasserregelung für Kältemaschinen bestimmtes und mittels einer Vorsteuerung zu betätigendes Membranventil bekannt, wobei der Zuführanschluß in den Ringstutzen umgebenden Außenraum mündet, während der Innenraum des Ringstutzens mit dem Ablauf in Verbindung ist. Dabei wirkt die Vorsteuerung durch eine Öffnung in der Ventilmembran auf einen zentrischen und durch eine Stellfeder belasteten Stützteller. Solche Ventile eignen sich vornehmlich für die schrittweise Steuerung kleiner Flüssigkeitsmengen, wie sie bei Kühlmittel-Kreisläufen notwendig sind. Zum Tränken von Vieh mit der augenblicklichen Steuerung großer Flüssigkeitsmengen sind sie praktisch nicht geeignet.

In der Verbindung des Rückraumes mit der Atmosphäre wird zweckmäßigerweise ein Gasfilter vorgesehen, das Verunreinigungen zuverlässig abhält, den Strömungsweg jedoch offenhält und leicht und schnell ausgwechselt werden kann.

Auf diese Weise wird oft erst, vor allem in staubreicher Atmosphäre, der Druckausgleich mit der Atmosphäre ermöglicht.

In manchen Fällen hat es sich als zweckmäßig erwiesen, zwischen der Tastmembran und dem Auslaß der Vorsteuerung eine verformbare Abdichtung anzubringen. Dies kann ein Balg sein, der nur eine begrenzte Fläche einer Membran umschließt. Wenn jedoch die Kraftübertragung durch den mit der Atmosphäre in Verbindung stehenden Rückraum erfolgt, empfiehlt sich die Ausbildung als diesen Raum abschließende Dichtmembran.

Die Tastmembran kann vom Beckenraum mechanisch getrennt und damit gegen Beschädigung geschützt angebracht sein, sie kann aber auch unmittelbar einen Teil des Beckenbodens bilden. In diesem Fall wird zweckmäßigerweise ein die Membran überdeckendes Schutzgitter oder dgl. vorgesehen. Durch veränderliche Zusatzbelastungen läßt sich die Membran auf unterschiedliche Steuerhöhen im Becken einjustieren. Zum Besipiel kann die Zusatzkraft durch auswechselbare Gewichte oder auch durch eine Feder aufgebracht sein, deren Abstützpunkt verlagert wird, um den Auslösepunkt zu verschieben.

Mitunter ist es zweckmäßig, das Membranventil an einem insbesondere rückseitigen Trägerteil des Beckens anzubringen und durch eine Steuerleitung mit der entfernt am Bekken angebrachten Vorsteuereinrichtung zu verbinden.

Nach einer weiteren Ausführungsform der Erfindung lassen sich die Ventilmembran und die Tastmembran durch einen gemeinsamen Deckel am Becken anbringen. Beispielsweise können beide Membranen nebeneinander in einer gemeinsamen Anlageebene zwischen Dekkel und Becken angebracht werden, abere es können auch Ventilmembran und Tastmembran parallel und zentrisch zueinander angeordnet werden.

Vorteilhafterweise kann die Anschlußläche für die Ventileinheit in der Rückwand des Beckens angeordnet werden. Sie läßt sich dort zuverlässig von außen durch ein Befestigungsschild und zum Innenraum des Beckens hin durch eine Trennwand abschirmen.

Am oberen Rand der Anschlußfläche bzw. -öffnung kann ein Zuführstutzen oder eine Zuführleitung in den Beckenkörper eingeformt werden. Die Trinkflüssigkeit läuft dann stets von oben ein, direkt zu dem zweickmäßigerweise oben anzuordnenden Membranventil, während die Tastmembran zur exakteren Steuerung tiefer liegend angebracht sein sollte Überall dort, wo die Ventilmembran dem Becken zugewandt ist, wird vorteilhafterweise der an der Ventilmembran anliegend .Ringstutzen einstückig an den Beckenkörper angeformt. Man kommt dann meist ohne sonderliche Bearbeitung aus.

Eine Federanordnung zur Beeinflussung des Schaltvorganges sollte wenigstens eine Feder aufweisen, die nach Art eines Kniehebels derart angesetzt ist, daß die von ihr ausgeübte Rückstellkraft bei steigender Auslenkung der Tastmembran kleiner wird. Auf diese Weise wird "deutlicher" geschaltet, die Schalthöhen können exakter bemessen werden, weil die auf das Vorsteuerorgan einwirkenden Kräfte größere Unterschiede erreichen.

Ein weiteres Mittel, die Exaktheit der Schaltung zu verbessern, läßt sich durch eine zwischen Tastmembran und Vorsteuerorgan eingeschaltete Kraftübersetzungsvorrichtung wie einen Hebel erreichen, dem insbesondere wiederum eine kniehebelartig wirkende Feder zugeordnet sein kann.

Alle hier für die Vorsteuerung des Membranventils entwickelten Mittel lassen sich nun vorteilhaft auch unmittelbar an Tränkvorrichtungen für Kleintiere mit einem in die Wasserzuleitung zum Becken eingeschalteten Steuerventil verwenden, wobei vorzugsweise als Betätigungsorgane des Steuerventils die Tastmembran unmittelbar eingesetzt wird und das Steuerventil die Ausbildung eines Vorsteuerventils für das Membranventil haben kann. Auf diese Weise können für den einen Zweck entwickelte Bauteile gleichermaßen auch für den anderen eingesetzt werden, beispielsweise die zwischen Tastmembran und Steuerventil eingeschalteten Zwischenmittel wie Hebel, Kniehebel, Federn, Dichtmembran und dgl.

Die Zeichnung gibt verschiedene Ausführungsformen der Erfindung in schematischer Darstellung beispielsweise wieder. Es zeigen

Fig. 1 einen lotrechten Teilschnitt durch eine erfindungsgemäße Tränkvorrichtung mit rückseitig eingebautem Membranventil und unter dem Boden des Beckens angeordneter Tastmembran,

Fig. 2 eine Abwandlung der Ausführung aus Fig. 1 mit zentrisch und parallel zueinander angeordneten Membranen,

Fig. 3 die gleiche Anordnung der beiden Membranen unter einem rückseitigen Trägerteil,

Fig. 4 eine der Darstellung in Fig. 3 vergleichbare geschlossene Ventileinheit auf der Oberseite des Beckenträgerteiles und

Fig. 5 eine an der Beckenrückwand angebrachte Ventileinheit.

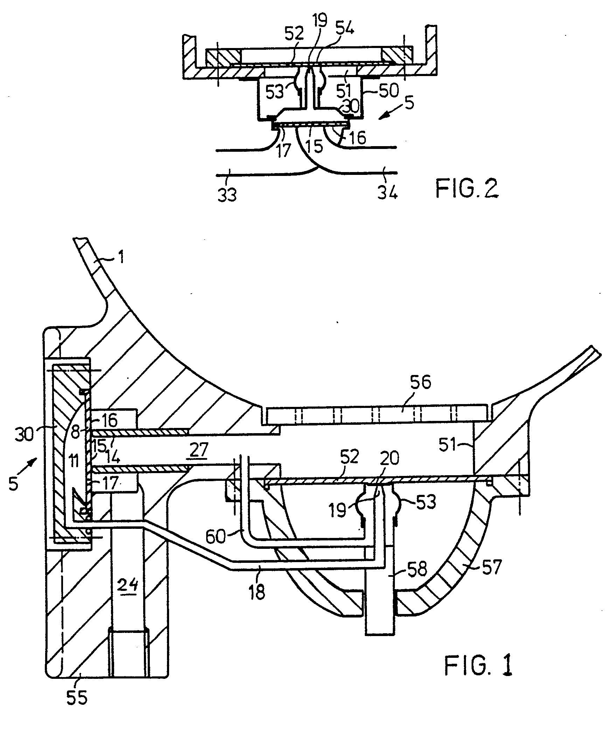

Bei der in Fig. 1 gezeigten Tränkvorrichtung ist das Becken 1 als einstückiges Formteil mit einem rückseitig unten angeordneten, als Trägerteil dienenden Beckenfuß 55 ausgebildet. Dieser nimmt in einer zweistufigen Ansenkung an seiner Rückseite das Membranventil 5 und eine Anschlußbohrung für eine Wasserleitung auf. Eine waagerechte Anschlußleitung 27 führt vom Membranventil zu einer in das Becken eingeformten Bodenöffnung 51, die von einem Sieb 56 überdeckt ist. Durch eine Tasse 57 ist der Rand einer Tastmembran 52 an der Unterseite des Beckens festgespannt. Im Boden der Tasse sitzt mit Umfangsspiel lotrecht einstellbar ein Stift 58, der mit seinem oberen Ende fest den Auslaß 19 einer Auslaßleitung 18 und das untere Ende eines Balges 53 trägt. Der im überigen abgeschlosene Innenraum dieses Balges ist durch eine Leitung 60 an die Anschlußleitung 27 und dadurch an den Beckenraum angeschlossen. An Unterseite der Tastmembran ist ein gesondertes plattenförmiges Vorsteuerorgan 20 angebracht, das mit dem Auslaß 19 zusammenwirkt.

Die Ventilmembran 8 ist mit ihrem Rand durch einen Deckel 30 an einer ringförmigen Anlagefläche zwischen einem äußeren Ansenkraum und einem inneren Ansenkraum festgespannt. Dabei bildet der Deckel 30 gegenüber dem mit der Zuführbohrung in Verbindung stehenden inneren Ansenkraum auf diesem gegenüber etwas größerem Durchmesser einen Vorspannraum 11, der an die zum Auslaß 19 führende Auslaßleitung 18 angeschlossen ist.

Innerhalb des inneren Ansenkraumes sitzt in Verlängerung der zum Becken führenden Anschlußleitung 27 ein Ringstutzen 14, der zentrisch sur Ventilmembran an dieser mit seiner Stirnfläche abdichtend anliegt und dort eine kreisförmige Innenfläche 15 von einer kreisringförmigen Außenfläche 16 im inneren Ansenkraum abschließt. Die Innenfläche 15 gehört somit zu dem durch die Anschlußleitung 27 gebildeten Beckenanschluß, die Außenfläche 16 zum Druckanschluß durch die Wasserleitung über Bohrung 24.

Die Durchbrechung 17 in der Ventilmembran hat wesentlich kleineren Querschnitt als der Auslaß 19 und bewirkt weinen allmälichen Druckausgleich zwischen der Außenfläche 16 im Bereich des inneren Ansenkraumes und dem gegenüberliegenden Vorspannraum 11, während der auf die Innenfläche 15 wirkende Druck vielfach kleiner ist und der Summe aus Atmosphärendruck und Flüssigkeitshöhe entspricht. Durch die größere, aus dem Vorspannraum 11 wirkende Kraft wird die Membran positiv abdichtend gegen die Stirnfläche des Ringstutzens 14 gelegt. Unter Druckdifferenz wird auch die Tastmembran 52 abdichtend gegen den Auslaß 19 gehalten.

Wenn nun beim Tränken eines Tieres die Flüssigkeitshöhe im Becken 1 sinkt, so fällt damit der Anlagedruck an der Tastmembran 52. Die Abdichtung zwischen Vorsteuerorgan 20 und Auslaß 19 entfällt, und es kann aus dem unter Druck stehenden Rückraum 11 eine Teilflüssigkeitsmenge über die Auslaßleitung 18 und die Leitung 60 zur Anschlußleitung 27 gelangen. Durch Druckabfall im Rückraum vermindert sich die Druckdifferenz im Bereich der Innenfläche 15. Dadurch wird die Ventilmembran 8 vom Ringstutzen 14 abgehoben, und die Tränkflüssigkeit kann am ganzen Umfang des Ringstutzens 14 nach innen durch die Anschlußleitung 27 ins Becken gelangen. Der dort eintretende Druckanstieg teilt sich zunächst über Leitung 60 und Auslaßleitung 18 dem Rückraum 11 mit, bis der Auslaß 19 durch das Vorsteuerorgan 20 der niedergedrückten Tastmembran geschlossen ist. Unter weiterer Unterstützung durch den Druckausgleich in der Durchbrechung 17 wird dann die Ventilmembran 8 wieder abdichtend an das frei Ende des Ringstutzens 14 angelegt.

Die Auswölbung der Ventilmembran 8 beim Tränkvorgang und damit ihr Öffnungshub sind abhängig von Werkstoff und Ausbildung der Membran. Sie können also durch Auswechseln der Ventilmembran bei vorgegebenem Druck geändert werden. Es lassen sich auch die Ventilquerschnitte ohne weiteres so bemessen, daß man selbst bei einem Wasserdruck von nur 200 mm Ws die maximal benötigte Menge von z.B. 25 1 Wasser zum Tränken eines Rindes in der Minute zurführen kann.

Gemäß Fig. 2 ist das Membranventil 5 durch einen Halter 50, der ebenso wie die Tasse 57 nach außen nicht geschlossen ist, unter der Bodenöffnung 51 des Beckens oder eines mit diesem verbundenen Raumes aufgehängt. Abweichend von der Leitung 60 aus Fig. 1 ist hier der Innenraum des Balges 53 mittels einer Durchbrechung 54 mit der Oberseite der Tastmembran und damit dem Becken verbunden. Dieser verhältnismäßig enge Balg 53 ist ebenso wie nach Fig. 1 mit seinen Rändern gegenüber der Tastmembran und dem Deckel 30 des Membranventils abgedichtet. Er läßt sich auch einstückig mit der Membran ausführen. Mit 33 und 34 sind hier zwei krümmerhafte Anschlußstutzen für Zu- und Ableitung bezeichnet.

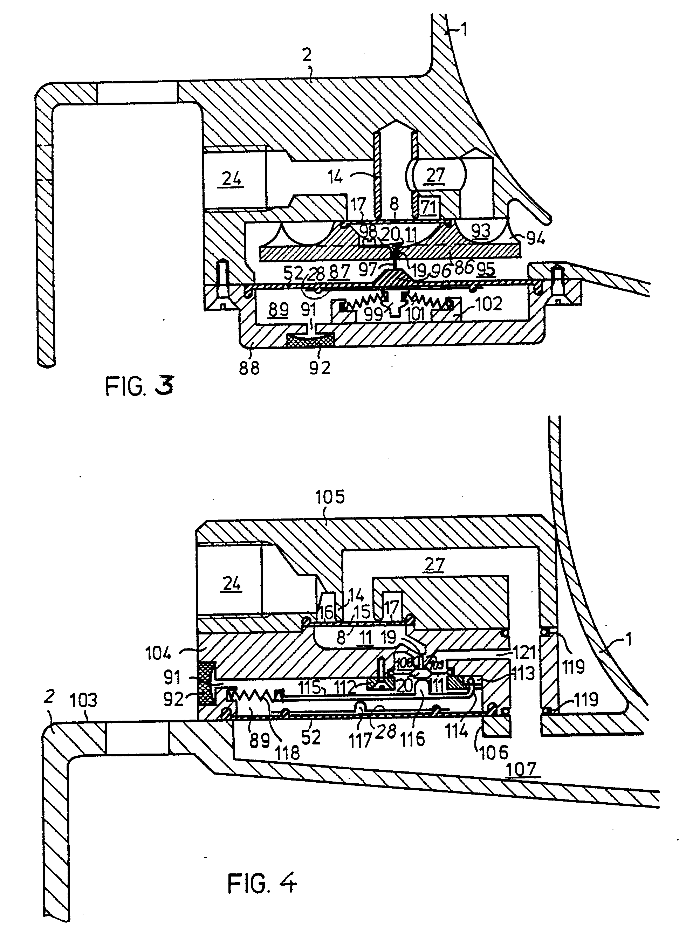

Gemäß Fig. 3 ist die Ventilmembran 8 des Membranventils 5 unten an einem rückseitigen Trägerteil 2 des Beckens 1 angeordnet. Dort ist sie jedoch durch einen Zwischendeckel 86 gehalten, der in nicht näher gezeigter Weise am Trägerteil 2 befestigt ist und in einer Ansenkung 87 liegt, die von der zentrisch zur Ventilmembran angeordneten und innen durch eine Metallscheibe 28 verstärkten Tastmembran 52 überspannt ist. Deren Rand ist wiederum von einem am Trägerteil 2 angeschraubten Deckel 88 überspannt, der unterhalb der Tastmembran eine Höhlung 89 bildet, die zum Druckausgleich mit der Atmosphäre über eine Öffnung 91 in Verbindung steht, die von einer Filterscheibe 92 überdeckt ist.

Die hier abgeknickte Anschlußleitung 27 mündet in einen zentrisch zur Ventilmembran 8 in die Oberseite des Zwischendeckels 86 eingeformten Ringkanal 93, der durch radiale Durchbrechungen 94 mit der zwischen beiden Membranen gebildeten Vorkammer 95 und mit dem Innenraum des Beckens 1 in Verbindung steht. Mit der Tränkflüssigkeit wird daher stets die Vorkammer ausgepült und dadurch ihre Funktionssicherheit erhalten.

Auf der Oberseite der Tastmembran 52 ist fest ein Verstärkungskegel 96 mit einem in der Membranachse nach oben ragenden Stift 97 angebracht, der durch einen im Zwischendekkel 86 eingeformten Auslaß 19 hindurchragt und von seinem freien Ende das durch eine Blattfeder 98 belastete Vorsteuerorgan 20 trägt. Auf der Unterseite der Tastmembran 52 ist eine weiterer Ansatz 99 angebracht, an dem sich zwei kniehebelartig angeordnete, entgegengesetzt gerichtete Druckfedern 101 abstützen, welchen jeweils ein Widerlager 102 am Deckel 88 zugeordnet ist. Bei einer Neigung der Druckfedern 101 zur Membranebene von ca. 15° ergibt sich eine auf den Stift 97 wirkende Aufwärtskräft, die der vom Wasserdruck beeinflußten Auslösekraft in Sinne Öffnen des Auslasses 19 und dadurch Abheben der Ventilmembran 8 entgegenwirkt. Dadurch wird sichergestellt, daß kleine Wasserstandsschwankungen nicht ständiges Ein- und Ausschlaten bewirken, sondern größerer Abstand zwischen den Schalthöhen erhalten wird.

Nach Fig. 4 weist der am Becken 1 rückseitig ausgeformte Trägerteil 2 dicht über dem Boden des Beckens eine waagerechte Oberseite 103 auf und auf der übereinander eine Anschlußplatte 104 und eine Zuführplatte 105 angebracht sind. Die Ventilmembran 8 sit zwischen den beiden Platten 104 und 105 eingespannt, und der Rand der Tastmembran 52 wird von der Anschlußplatte 104 auf dem Rand einer kreisförmigen Öffnung 106 gehalten, die in der Oberseite des Trägerteiles 2 eingeformt ist un von der aus ein Speisekanal 107 tangential in den Boden des Beckens einmündet und die Funktion einer Vorkammer übernimmt. Beide Platten 104 und 105 sind durch gemeinsame Schruben am Trägerteil 2 befestigt.

Die Höhlung 89 mit Öffnung 91 und Filterscheibe 92 ist oberhalb der Tastmembran 52 in die Unterseite der Anschlußplatte 104 eingeformt. Von der Oberseite der Höhlung 89 ausgehend ist in die Anschlußplatte 104 eine zylindrische Ausnehmung 108 mit einem kegelförmigen Nippel 109 eingeformt, der den vom Vorspannraum 11 hergeführten Auslaß 19 aufnimmt. Das mit dem Auslaß 19 zusammenwirkende Vorsteuerorgan 20 ist in der Mitte einer Dichtmembran 111 angebracht, welche die Ausnehmung 108 verschließt und über dieser mit ihrem Rand durch eine Ringscheibe 112 eingespannt ist. In dieser Ringscheibe ist mittels eines vom Rand her eingebrachten Stufen-Schlitzes 113 und eines in diesen eingreifenden, abgekröpften und verdickten Lageransatzes 114 ein Lager 113/114 gebildet, in dem schwenkeinstellbar ein Hebel 115 gelagert ist, der sich mit einem Ansatz 116 am Vorsteuerorgan 20 und gegenüberliegend an einem zentrisch an der Tastmembran 52 angeformten Ansatz 117 abstützt. Am freien Ende des Hebels 115 greift etwa in dessen Verlängerung eine am Rand der Höhlung 89 abgestützte Druckfeder 118 an.

Vom Inneren des in die Zuführplatte 104 eingeformten Ringstutzens 14 führt die Anschlußleitung 27 U-förmig zum Speisekanal 107 durch in den Übergangsstellen vorgesehene Dichtungen 119. Durch einen Rückführkanal 121 steht die Ausnehmung 108 oberhalb der Dichtmembran 111 mit der Anschlußleitung 27 in Verbindung.

Durch die Abstützung an den mit unterschiedlichen Abständen vom Lager 113, 114 vorgesehenen Ansätzen 116 und 117 bewirkt der Hebel 115 zunächst eine Schalt verstärkung, nach der Darstellung eine Verdoppelung der auf das Vorsteuerorgan 20 wirkenden Betätigungskraft. Zudem bewirkt die Durckfeder 118 eine Vorbelastung des Hebels 115 entgegen dem Uhrzeigersinn und damit wiederum gegen den von unten auf die Tastmembran 52 einwirkenden Wasserdruck. Dieser Vorsapnnung kann zudem durch Änderung der Federspannung eingestellt werden.

Bei gefülltem Becken ist der Auslaß 19 durch das Vorsteuerorgan 20 geschlossen. Mit der beim Trinken verminderten Wasserhöhe sinkt der Druck auf die Tastmembran, die damit aus der vorherigen Lage etwas nach unten ausgelenkt wird, was noch verstärkt wird durch die Druckfeder 118, deren Wirkungslinie stets unterhalb des Lagers im Stufenschlitz 113 vorbeiführt. Bei einer die unterste Grenze bildenden Wasserhöhe im Becken 1 wird das Vorsteuerorgan 20 etwas vom Auslaß 19 abgehoben und dadurch der Füllvorgang über die Anschlußleitung 27 und den Speisekanal 107 in Gang gesetzt. Dieser Füllvorgang wird erst dann wieder beendet, wenn bei Erreichen der größten vorgesehenen Wasserhöhe die Tastmembran 52 über den Hebel 115 durch das Vorsteuerorgan 20 den Auslaß 19 wieder schließt.

Die gesamte Ventil- und Steueranordnung muß nicht unbedingt unmittelbar am Becken vorgesehen sein. Sie läßt sich vorteilhafterweise auch mit größerem lotrechten Abstand unterhalb des Beckens anbringen, wenn der Zuführdruck hinreichend groß ist, um ein schnelles Füllen des Beckens zu ermöglichen. Auf diese Weise wird nämlich der auf eine Tastmembran wirkende Druck durch die lotrechte Höhendifferenz vergrößert, was eine exaktere Steuerung mit größerer Reaktionsgeschwindigkeit ermöglicht.

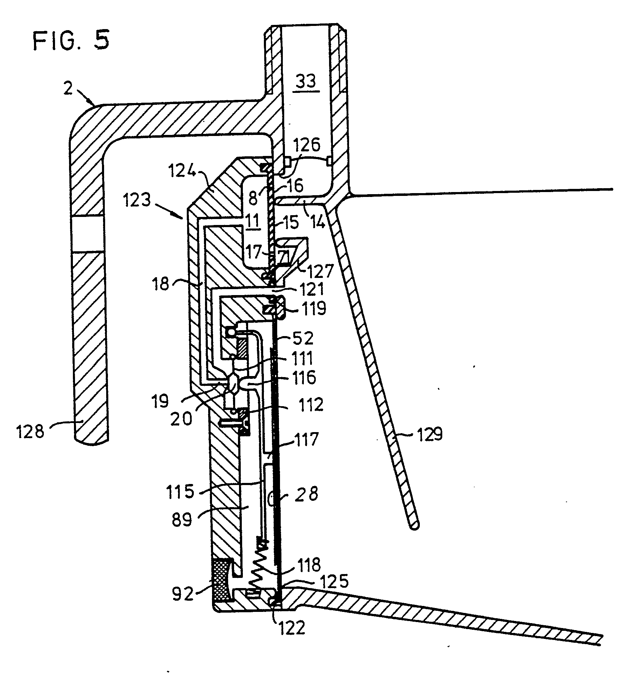

Nach Fig. 5 ist auf der Rückseite des Beckens 1 eine ebene Anlagefläche 122 angeformt, an welcher lotrecht übereinander die Tastmembran 52 und die Ventilmembran 8 einer Ventileinheit 123 durch ein am Becken angeschraubtes gemeinsames Ventilgehäuse 124 mit ihren Rändern anliegend gehalten werden und eingespannt sind. Demgemäß sind in der Anlagefläche 122 zwei Membranöffnungen 125 und 126 eingeformt. Die Außenfläche 16 der Ventilmembran 8 ist zudem gegenüber dem Beckenraum durch den Ringstutzen 14 und einen diesen umgebenden und den Außenraum 71 umschließenden Halbringteil 127 abgeschlossen. Beide Teile 14 und 127 sind einstückig an das Becken angeformt.

Rückseitig ist die Ventileinheit durch die Halteplatte 128 des Trägerteiles 2 abgeschirmt, zum Beckeninnenraum hin durch einen Schild 129 des Beckens. Hinsichtlich der Membrananordnung entspricht diese Ausbildung der in Fig. 11 gezeigten Anordnung, hinsichtlich der technischen Ausführung der Ventilanordnung nach Fig. 13. Ihr Vorzug liegt darin, daß man mit möglichst wenigen Teilen auskommt. Wenn man von der Führung der Leitungen 18 und 121 absieht, ist zum Becken im Prinzip nur das Ventilgehäuse 124 zu fertigen, und die Tränkflüssigkeit wird vom unmittelbar oben am Becken angeformten Anschlußstutzen 33 eingeleitet und strömt von dort hinter dem Schild 129 bis zum Boden des Beckens. Auf diese Weise wird bei sehr geringen Herstellungskosten außergewöhnliche Betriebssicherheit und Zuverlässigkeit erzielt.

Der Anschluß an eine einzige Anschlußfläche 122 macht es hier besonders leicht, einzelne Ventileinheiten nach Bedarf auszutauschen. So kann auch hier eine Ventileinheit eingesetzt werden, die anstelle einer Tastmembran einen Schwimmer oder ein vom Tier in bekannter Weise zu betätigendes Element für das Vorsteuerventil enthält, etwa dergestalt, daß der Hebel 115 aus dem Beckenraum heraus direkt betätigt wird.

Die gezeigten Ausführungen können noch in mancherlie Weise abgewandelt werden. So können sich Auslösehebel und Auslöseknöpfe und dgl. gegenseitig vertreten. Anstelle eines tellerförmigen Vorsteuerorgans kann man ein kegelförmiges einsetzen, den Auslaß 19 unmittelbar im Deckel 30 bzw. einer den Vorspannraum überdeckenden Wand anbringen, und dgl. mehr. In besonderen Fällen läßt sich auch ein kippbar gelagerter Auslöser einsetzen oder eine hydraulische Steuerung einrichten.

Weder die Ventilmembran, noch eine Tastmembran oder eine Abdichtmembran muß in der dargestellten Weise, also waagerecht oder lotrecht, angebracht werden, sie kann jede beliebige Lage im Raum einnehmen und stets in jeder der beiden durch ihre Lage gegebenen Richtungen betätigt werden. Ebenso müssen die einander zugehörigen Membranen nicht parallel zueinander orientiert sein, sondern können jeden geeigneten Winkel einschließen.

Besondere Bedeutung hat jedenfalls eine Steuereinrichtung, die als geschlossene Baueinheit an eine gemeinsame Anschlußfläche des Beckens angeschlossen wird, wobei sich die Anschlußmittel für eine Ausführung mit mechanischer als auch eine solche mit selbsttätiger Auslösung in gleicher Weise gestalten lassen, so daß jeweils wahlweise das eine oder das andere Ventil zum Einsatz gebracht werden kann.

Die Erfindung ist bisher beispielsweise für die Anwendung an Tränkbecken für Rinder beschrieben und dargestellt, sie ist jedoch keineswegs auf diese spezielle Anwendung beschränkt, sondern kann mitunter gar ohne jede bauliche Abwandlung auf anderen Gebieten, zum Tränken unterschiedlicher Tierarten wie Schweine, Geflügel und dgl. zum Einstatz gebracht werden.

**Patentansprüche**

1. Tränkvorrichtung für Tiere, mit einem Becken (1), das an eine Zuführleitung für Tränkflüssigkeit durch ein in Abhängigkeit vom Flüssigkeitsbedarf mittels einer Vorsteuerung zu betätigendes Membranventil angeschlossen ist, das eine mit ihrem Rand in einem Ventilgehäuse eingespannte Ventilmembran (8) aufweist, deren erste Seite abhebbar mit einem Ringstutzen (14) zusammenwirkt, der einen Zuführanschluß von einem Beckenanschluß an der Ventilmembran (8) trennt, und deren zweite Seite von einem Vorspannraum (11) überdeckt ist, dessen Druck mittels eines Vorsteuerorgans (20) einer Vorsteuereinrichtung durch eine Tastmembran (52) beeinflußt ist, die vom Flüssigkeitsdruck im Becken (1) gegen einen umschlossenen Rückraum (89) beaufschlagt ist, der über eine Strömungsverbindung (91) an einen Gasdruckraum angeschlossen ist, dadurch gekennzeichnet, daß die vom Rückraum (89) ausgehende Strömungsverbindung (91) in die Atmosphäre mündet.

2. Tränkvorrichtung nach Anspruch 1, dadurch gekennzeichnet, daß der Zuführanschluß (24) in den den Ringstutzen (14) umgebenden Außenraum des Membranventils (5) mündet, während der Innenraum des Ringstutzens (14) mit dem Beckenanschluß (95, 107) in Verbindung ist.

3. Tränkvorrichtung nach einem der Ansprüche 1 oder 2, dadurch gekennzeichnet, daß in der Verbindung des Rückraumes (89) mit der Atmosphäre ein Gasfilter (92) vorgesehen ist.

4. Tränkvorrichtung nach einem der Ansprüche 1 bis 3, dadurch gekennzeichnet, daß zwischen der Tastmembran (52) und dem Auslaß (19) der Vorsteuerung eine verformbare Abdichtung (111) angebracht ist.

5. Tränkvorrichtun nach Anspruch 4, dadurch gekennzeichnet, daß die Abdichtung eine Dichtungsmembran (111) aufweist, die den mit der Atmosphäre in Verbindung stehenden Rückraum (89) gegenüber dem Auslaß (19) der Vorsteuerung abschließt.

6. Tränkvorrichtung nach einem der Ansprüche 1 bis 5, dadurch gekennzeichnet, daß das Membranventil (5) an einem rückseitigen Trägerteil des Beckens (1) angebracht und durch eine Steuerleitung mit der entfernt am Becken (1) angebrachten Vorsteuereinrichtung verbunden ist.

7. Tränkvorrichtung nach einem der Ansprüche 1 bis 6, dadurch gekennzeichnet, daß die Ventilmembran (8) und die Tastmembran (52) durch einen gemeinsamen Deckel am Becken (1) gehalten sind.

8. Tränkvorrichtung nach einem der Ansprüche 1 bis 7, dadurch gekennzeichnet, daß beide Membranen (8, 52) nebeneinander in einer gemeinsamen Anlageebene (122) am Becken (1) angebrachte sind.

9. Tränkvorrichtung nach einem der Ansprüche 1 bis 8, dadurch gekennzeichnet, daß Ventilmembran (8) und Tastmembran (52) parallel und zentrisch zueinander angeordnet sind.

10. Tränkvorrichtung nach einem der Ansprüche 1 bis 9, dadurch gekennzeichnet, daß die Anschlußfläche (122) für die Ventileinheit (123) an der Rückwand des Beckens (1) angeordnet ist.

11. Tränkvorrichtung nach Anspruch 6, dadurch gekennzeichnet, daß am oberen Rand der Anschlußfläche (122) ein Zuführstutzen (33) bzw. eine Zuführleitung in den Beckenkörper eingeformt ist.

12. Tränkvorrichtung nach einem der Ansprüche 1 bis 7, dadurch gekennzeichnet, daß der an der Ventilmembran (8) anliegende Ringstutzen (14) einstückig in den Beckenkörper eingeformt ist.

13. Tränkvorrichtung nach einem der Ansprüche 1 bis 12, dadurch gekennzeichnet, daß wenigstens eine Feder (101) einer Federanordnung (99, 101, 102) nach Art eines Kniehebels derart angeschlossen ist, daß die von ihr ausgeübte Rückstellkraft bei steigender Auslenkung der Tastmembran (52) kleiner wird.

14. Tränkvorrichtung nach einem der Ansprüche 1 bis 9, dadurch gekennzeichnet, daß zwischen Tastmembran (52) und Vorsteuerorgan (20) eine Kraftübersetzungsvorrichtung wie ein Hebel (115) eingeschaltet ist.

**Revendications**

1. Abreuvoir pour animaux, comportant une vasque (1) raccordée à un conduit d'alimentation en liquide d'abreuvage par une soupape à membrane actionnable au moyen d'une commande pilote en fonction des besoins en liquide, la soupape présentant une membrane (8) tendue par ses bords dans une boîte à soupape, membrane dont la première face coopère en se soulevant avec un embout annulaire (14) qui sépare un raccord d'alimentation d'une raccord de la vasque sur la membrane (8) et dont la deuxième face est recouverte par un volume de précontrainte (11) dont la pression est ajustable sous l'action d'un organe de commande pilote (20) d'un dispositif de commande pilote, au travers d'une membrane palpeuse (52) soumise à la pression du liquide s'exerçant dans la vasque (1) vis-à-vis d'une enceinte arrière (89) fermée, laquelle est raccordée à une chambre de gaz sous pression par l'intermédiaire d'une liaison d'élcoulement (91), caractérisé en ce que liaison d'écoulement (91) provenant de l'enceinte arrière (89) débouche dans l'atmosphère.

2. Abreuvoir selon la revendication 1, caractérisé en ce que le raccord d'alimentation (24) débouche dans l'espace extérieur de la soupape à membrane (5), entourant l'embout annulaire (14), tandis que l'espace intérieur de l'embout annulaire (14) est relié au raccord (95, 107) de la vasque.

3. Abreuvoir selon l'une des revendications 1 ou 2, caractérisé en ce qu'il est prévu un filtre à gaz (92) dans la liaison entre l'enceinte arrière (89) et l'atmosphère.

4. Abreuvoir selon l'une des revendications 1 à 3, caractérisé en ce qu'un organe d'étanchéité (111) déformable est monté entre la membrane palpeuse (52) et l'évacuation (19) de la commande pilote.

5. Abreuvoir selon la revendication 4, caractérisé en ce que l'organe d'étanchéité présente une membrane d'étanchéité (111) qui isole l'enceinte arrière (89) en liaison avec l'atmosphère, de la sortie (19) de la commande pilote.

6. Abreuvoir selon l'une des revendications 1 à 5, caractérisé en ce que la soupape à membrane (5) est montée sur un support prévu à l'arrière de la vasque (1) et est reliée au dispositif de commande pilote disposé à distance sur la vasque (1), par une conduite de régulation.

7. Abreuvoir selon l'une des revendications 1 à 6, caractérisé en ce que la membrane de soupape (8) et la membrane palpeuse (52) sont maintenues par un couvercle commm sur la vasque (1).

8. Abreuvoir selon l'une des revendications 1 à 7, caractérisé en ce que les deux membranes (8, 52) sont montées côte à côte sur la vasque (1) dans un plan d'appui commun (122).

9. Abreuvoir selon l'une des revendications 1 à 8, caractérisé en ce que la membrane de soupape (8) et la membrane palpeuse (52) sont disposées parallèmement et centrées l'une par rapport à l'autre.

10. Abreuvoir selon l'une des revendications 1 à 9, caractérisé en ce que la surface de jonction (122) pour le bloc-soupape (123) est disposée sur la paroi arrière de la vasque (1).

11. Abreuvoir selon la revendication 6, caractérisé en ce qu'un raccord d'alimentation (33) ou conduit d'alimentation est formé dans le corps de la vasque, sur le bord supérieur de la surface de jonction (122).

12. Abreuvoir selon l'une des revendications 1 à 7, caractérisé en ce que l'embout annulaire (14) s'appliquant contre la membrane de soupape (8) est formée en une seule pièce avec le corps de la vasque.

13. Abreuvoir selon l'une des revendications 1 à 12, caractérisé en ce qu'au moins un ressort (101) d'un ensemble de ressorts (99, 101, 102) est inséré, à la manière d'un levier coudé, de telle sorte que la force de rappel qu'il exerce diminue au fur et à mesure qu'augmente l'inflexion de la membrane palpeuse (52).

14. Abreuvoir selon l'une des revendications 1 à 9, caractérisé en ce qu'un organe de transmission de force, tel qu'un levier (115), est inséré entre la membrane palpeuse (52) et l'organe de commande pilote (20).

**Claims**

1. Apparatus for watering animals, with a basin (1) which is connected to a watering liquid feed line by a diaphragm valve designed to be actuated by a preliminary control means as a function of the demand for liquid, its edge comprising a valve diaphragm (8) clamped in a valve housing and the first side of which co-operates removably with an annular connection (14) which separates a feed connection from a basin connection at the valve diaphragm (8), the second side being covered by a pretensioning chamber (11), the pressure of which is influenced by an anticipatory control means (20) of an anticipatory control device by a keying diaphragm (52) which is subject to the action of fluid pressure in the basin (1) against an enclosed rear space (89) which is connected to a gas pressure chamber through a flow connection (91), characterised in that the flow connection (91) starting from the rear space (89) discharges into the atmosphere.

2. Watering apparatus according to Claim 1, characterised in that the feed connection (24) discharges into the outer space of the diaphragm valve (5) which surrounds the annular connection (14), while the interior of the annular connection (14) communicates with the basin connection (5, 107).

3. Watering apparatus according to one of Claims 1 or 2, characterised in that a gas filter (92) is provided in the connection between the rear space (89) and the atmosphere.

4. Watering apparatus according to one of Claims 1 to 3, characterised in that between the keying diaphragm (52) and the outlet (19) of the anticipatory control there is a deformable seal (111).

5. Watering apparatus according to Claim 4, characterised in that the seal comprises a sealing diaphragm (111) which seals in respect of the outlet (19) of the anticipatory control the rear space (89) which communicates with the atmosphere.

6. Watering apparatus according to one of Claims 1 to 5, characterised in that the diaphragm valve (5) is mounted on a rear carrier part of the basin (1) and is connected by a control line to the anticipatory control means mounted remotely on the basin (1).

7. Watering apparatus according to one of Claims 1 to 6, characterised in that the valve diaphragm (8) and the keying diaphragm (52) are held on the basin (1) by a common cover.

8. Watering apparatus according to one of Claims 1 to 7, characterised in that both diaphragms (8, 52) are provided one alongside of the other on the basin (1) in a common plane (122).

9. Watering apparatus according to one of Claims 1 to 8, characterised in that valve diaphragm (8) and keying diaphragm (52) are disposed parallel with and centrally of each other.

10. Watering apparatus according to one of Claims 1 to 9, characterised in that the connecting face (122) for the valve unit (123) is located on the rear wall of the basin (1).

11. Watering apparatus according to Claim 6, characterised in that there is integrally moulded into the basin body on the top edge of the connecting face (122) a feed connector (33) or a feed line.

12. Watering apparatus according to one of Claims 1 to 7, characterised in that the annular connector (14) bearing on the valve diaphragm (8) is integrally moulded into the basin body.

13. Watering apparatus according to one of Claims 1 to 12, characterised in that at least one spring (101) of a spring arrangement (99, 101, 102) is so connected after the fashion of a toggle lever that the restoring force which it exerts becomes smaller upon increasing deflection of the keying diaphragm (52).

14. Watering apparatus according to one of Claims 1 to 9, characterised in that incorporated between the keying diaphragm (52) and the anticipatory control means (20) is a force transmitting device such as a lever (115).

0 046 513

FIG. 2

FIG. 1

1

0 046 513

FIG. 3

FIG. 4

2

FIG. 5